# EUROPEAN PATENT SPECIFICATION

(11) **EP 3 552 376 B1**
(45) Date of publication and mention of the grant of the patent: **24.05.2023**
(21) Application number: 17896580.2
(22) Date of filing: 17.02.2017
(51) Int. Cl.: H04M 1/725, G06F 9/44, H04M 1/27457, H04M 1/7243, H04L 51/56, H04M 1/72436

(54) **CARD-BASED INFORMATION MANAGEMENT METHOD AND SYSTEM**
KARTENBASIERTES INFORMATIONSVERWALTUNGSVERFAHREN UND -SYSTEM
PROCÉDÉ ET SYSTÈME DE GESTION D'INFORMATIONS SUR LA BASE D'UNE CARTE

(43) Date of publication of application: 16.10.2019
(73) Proprietor: Microsoft Technology Licensing, LLC, Redmond, WA 98052-6399 (US)
(72) Inventor: HUANG, Chunyi, Redmond, Washington 98052 (US); GAO, Bo, Redmond, Washington 98052 (US); LIU, Xinyu, Redmond, Washington 98052 (US); ZHENG, Siyuan, Redmond, Washington 98052 (US); XIE, Xiaofeng, Redmond, Washington 98052 (US); YU, Wei, Redmond, Washington 98052 (US); XUE, Weiwen, Redmond, Washington 98052 (US); YE, Shenghua, Redmond, Washington 98052 (US)
(74) Representative: Townsend, Martyn
(86) International application number: PCT/CN2017/073898
(87) International publication number: WO 2018/148926

(56) References cited:
- EP-A2- 1 158 446
- WO-A1-95/14964
- CN-A- 105 872 224
- CN-A- 106 126 207
- DE-A1-102012 000 235
- US-A1- 2013 185 650
- US-A1- 2016 307 195
- US-A1- 2017 048 172
- US-B1- 6 424 829

## Description

### BACKGROUND

A huge amount of information is available on various media such as a website, a chatting session, an email, a disk, and so on. The information may be in various formats, for example, the information may be in a video format, an image format, a voice format, a text format, a website format, and so on. When a user finds some interesting information on the media, the user may store the information for later utilization. Typically information in different formats may be stored in a folder or in different folders corresponding to the different formats.

The CN106126207A discloses a desktop information display method and apparatus as well as a mobile terminal. The desktop information display method comprises the steps of obtaining message data of at least one specified data source; generating a corresponding information card through the obtained message data, wherein the information card comprises drawing information used for drawing the information card; and drawing the information card arranged in a specified position by utilizing the corresponding drawing information and displaying the information card on a screen according to a preset display policy.

Furthermore, the US6424829B1 discloses a method and a wireless communication terminal for handling location independent short messages. The terminal comprises control means for handling receiving and/or transmitting a location independent short message over a cellular communication network. The short message comprises identification means. Also, the terminal comprises display means for presenting short messages to a user of the terminal, and one message folder to place and/or store location independent short messages in. The folder is provided on the display means, and having sorting means to select location independent short messages upon receiving/sending a location independent short message. The sorting means sorts a message automatically into the folder, when the identification means in the location independent short message is recognized by the sorting means.

Additionally, DE 10 2012 000 235 A1 discloses a security system for securing electronic messages, wherein received electronic messages are transferred into a standardized electronic mail format with a header and a message content and stored in the mail format in a folder system. A part of the electronic messages is stored in a database in a unitary format.

Moreover, US 2017/0048172A1 discloses a system for converting messages received from different sources into a universal file management system format managed by a central server. Upon receiving the messages, the central server converts each message into at least one folder and file. The files or folders can be stored in a secure central repository or memory. Files or folders may be marked as sensitive and restricted from access, copying, or other distribution.

Further, EP 1 158 446 A2 discloses a unified messaging system that includes a means for receiving a message at a unified messaging computer server, a first translation means coupled to the means for receiving, the translation means translating the message into a neutral object, a storage means coupled to the computer server for storing the neutral object, a retrieval means for retrieving the neutral object from the storage means, and a second translation means for converting the neutral object into a message having a form desired by an intended recipient is coupled to said computer server.

### SUMMARY

This Summary is provided to introduce a selection of concepts that are further described below in the Detailed Description.

Embodiments of the present disclosure provide a method as claimed in claim 1, an apparatus as claimed in claim 2, and a computer program product as claimed in claim 3.

It should be noted that the above one or more aspects comprise the features hereinafter fully described and particularly pointed out in the claims. The following description and the drawings set forth in detail certain illustrative features of the one or more aspects.

### BRIEF DESCRIPTION OF THE DRAWINGS

The disclosed aspects will hereinafter be described in connection with the appended drawings that are provided to illustrate and not to limit the disclosed aspects.
Figure 1 illustrates an exemplary environment where the described techniques can be implemented.
Figure 2 illustrates an exemplary computing device where the described techniques can be implemented.
Figure 3 illustrates an exemplary scenario for managing information.
Figures 4A to 4C illustrates exemplary management of information.
Figure 5 illustrates an exemplary scenario for collaborative managing information according to an embodiment.
Figure 6 illustrates an exemplary synchronization process of a card collection according to an embodiment.
Figure 7 illustrates an exemplary synchronization process of a card collection according to an embodiment.
Figure 8 illustrates an exemplary association process between two services according to an embodiment.
Figure 9 illustrates a method for managing information.
Figure 10 illustrates an exemplary apparatus for managing information.
Figure 11 illustrates an exemplary computing system.

### DETAILED DESCRIPTION

The present disclosure will now be discussed with reference to several exemplary implementations.

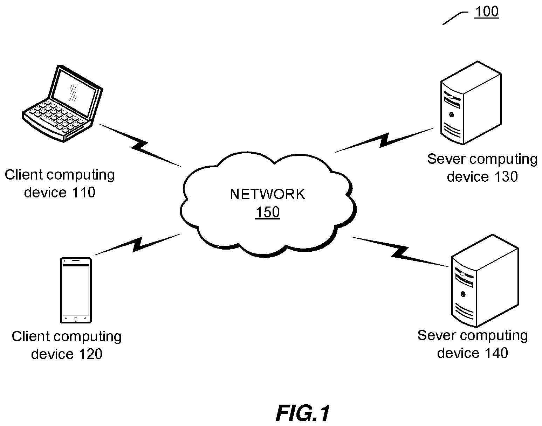

Figure 1 illustrates an exemplary environment where embodiments of the disclosure can be implemented. It is to be appreciated that the structure and functionality of the environment are described only for the purpose of illustration without suggesting any limitations as to the scope of the disclosure. The disclosure can be embodied with a different structure or functionality.

The exemplary environment or system 100 includes a network 150. The network 150 may be implemented by means of one or more of various types of networks such as Local Area Networks (LAN), Wide Area Networks (WAN), wireless network, and so on, which are shown collectively as network 150.

Network 150 may include any of a variety of wireless sub-networks that may further overlay stand-alone ad-hoc networks, and the like, to provide an infrastructure-oriented connection for client devices such as devices 110, 120 and so on. Such sub-networks may include mesh networks, Wireless LAN (WLAN) networks, cellular networks, and the like. Network 150 may further include an autonomous system of terminals, gateways, routers, and the like connected by wireless radio links, and the like.

Network 150 is configured to couple one or more servers such as server computing devices 130, 140 and their respective components with other computing devices, such as client device 110, 120. Network 150 is enabled to employ any form of computer readable media for communicating information from one electronic device to another.

Client computing devices 110, 120 may include virtually any device capable of receiving and sending a message over a network 150. Examples of client computing devices 110, 120 include cellular telephones, smart phones, radio frequency (RF) devices, music players, digital cameras, Personal Digital Assistants (PDAs), handheld computers, personal computers, laptop computers, wearable computers, tablet computers, integrated devices combining one or more of the preceding devices, or the like. One or more of client devices 110, 120 may also be configured to operate over a wired and/or a wireless network.

Client devices 110, 120 typically range widely in terms of capabilities and features. For example, a cell phone may have a numeric keypad and a few lines of monochrome LCD display on which only text may be displayed. In another example, a web-enabled client device may have a touch sensitive screen, a stylus, and several lines of color LCD display in which both text and graphic may be displayed.

A web-enabled client device may include a browser application that is configured to receive and to send web pages, web-based messages, or the like. The browser application may be configured to receive and display graphic, text, multimedia, or the like, employing virtually any web based language, including a wireless application protocol messages (WAP), or the like. In one embodiment, the browser application may be enabled to employ one or more of Handheld Device Markup Language (HDML), Wireless Markup Language (WML), WMLScript, JavaScript, Standard Generalized Markup Language (SMGL), HyperText Markup Language (HTML), eXtensible Markup Language (XML), JavaScript Object Notation (JSON), or the like, to display and send information.

Client computing devices 110, 120 also may include a client application that is configured to receive content from another computing device, including, without limit, server computing devices 130, 140 or other client computing devices. The client application may include a capability to provide and receive textual content, multimedia information, or the like. The client application may further provide information that identifies itself, including a type, capability, name, or the like. In one embodiment, client devices 110, 120 may uniquely identify themselves through any of a variety of mechanisms, including a phone number, Mobile Identification Number (MIN), an electronic serial number (ESN), mobile device identifier, network address, such as IP (Internet Protocol) address, Media Access Control (MAC) layer identifier, or other identifier. The identifier may be provided in a message, or the like, sent to another computing device.

Client computing devices 110, 120 may also be configured to communicate a message, such as through email, Short Message Service (SMS), Multimedia Message Service (MMS), instant messaging (IM), internet relay chat (IRC), Extensible Messaging and Presence Protocol (XMPP), or the like, to another computing device. However, the present disclosure is not limited to these message protocols, and virtually any other message protocol may be employed.

Client devices 110, 120 may further be configured to include a client application that enables the user to log into a user account that may be managed by another computing device. Such user account, for example, may be configured to enable the user to receive emails, send/receive IM messages, SMS messages, access selected web pages, download scripts, applications, or a variety of other content, or perform a variety of other actions over a network. However, managing of messages or otherwise accessing and/or downloading content, may also be performed without logging into the user account. Thus, a user of client devices 110, 120 may employ any of a variety of client applications to access content, read web pages, receive/send messages, or the like. For example, the user may employ a browser or other client application to access a web page hosted by a Web server implemented as server computing device 130. Messages received by client computing devices 110, 120 may be saved in non-volatile memory, such as flash and/or PCM, across communication sessions and/or between power cycles of client computing devices 110, 120. The term content refers to any kind of content, for example, without limit, text, image, video, voice, webpages, and so on. The term message refers to an information unit that includes content, and may be employed interchangeably with the term content.

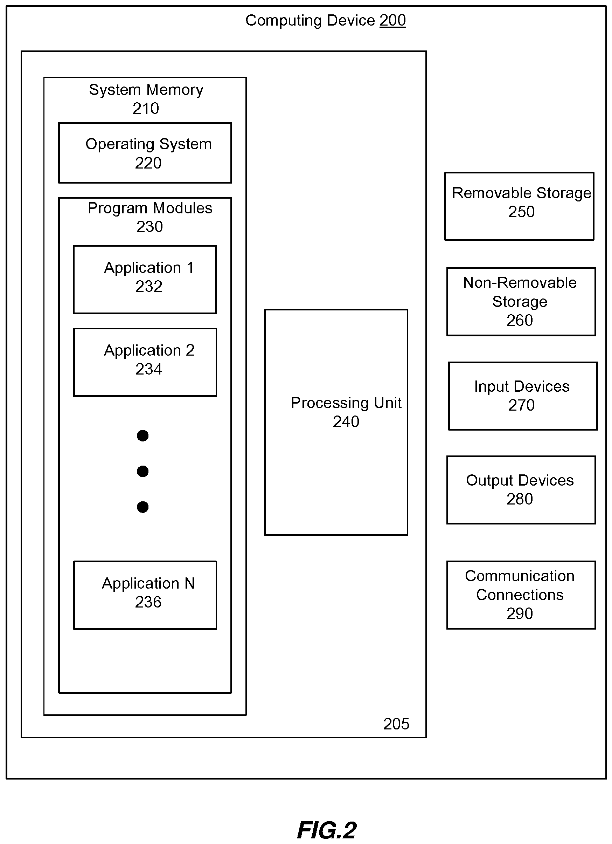

Figure 2 is a block diagram illustrating exemplary physical components of a computing device 200 with which embodiments of the disclosure may be practiced. The computing device 200 may be one of the client computer device 110, 120 in some embodiments. The computing device 200 may be one of the server computer device 130, 140 in some embodiments. In a basic configuration, the computing device 200 includes a processing unit 240 and a system memory 210. The processing unit 240 may present at least one processor for software program execution in computing device 200.

The system memory 210 may comprise, but is not limited to, volatile storage (e.g., random access memory), non-volatile storage (e.g., read-only memory), flash memory, or any combination of such memories. The system memory 210 may include an operating system 220 and one or more program modules 230 suitable for running software applications 232-236. The operating system 220 may be suitable for controlling the operation of the computing device 200. Examples of the operating system 220 include a general-purpose operating system such as a version of UNIX, or LINUX, or a specialized client-side and/or mobile communication operating system such as Microsoft's Windows Phone, Google's Android, Apple's IOS, and so on. Embodiments of the disclosure may be practiced in conjunction with other operating systems, or any other application program and is not limited to any particular application or system.

This basic configuration is illustrated by those components within a dashed line 205. The computing device 200 may have additional features or functionality. For example, the computing device 200 may also include additional data storage devices (removable and/or non-removable) such as, for example, magnetic disks, optical disks, or tape. Such additional storage is illustrated by a removable storage device 250 and a non-removable storage device 260.

The computing device 200 may also have one or more input devices 270 such as a keyboard, a mouse, a pen, a sound input device, a touch input device, etc. The one or more output devices 280 such as a display, speakers, a printer, etc. may also be included. The aforementioned devices are examples and others may be used. The computing device 200 may include one or more communication connections 290 allowing communications with other computing devices such as the client computing device 110, 120 and the server computing device 130, 140 as shown in Figure 1. Examples of suitable communication connections 290 include, but are not limited to, RF transmitter, receiver, and/or transceiver circuitry universal serial bus (USB), parallel, and/or serial ports.

Various applications 232-236 may be executed on the processing unit 240 to provide information for users. Examples of such applications include, but not limit to, a browser program that is generally used to present content of a website, an instant messaging (IM) program that is generally used to implement instant communication among users, a multimedia player program that is generally used to play multimedia such as video, audio, or static image, a text processing program that is generally used to present various documents.

A user may access information such as video, voice, text, website, image and so on through various applications. When a user is interested in some information, the user may store the information in its own format. For example, if a user finds a picture is interesting when the user is browsing a website, the user may store the picture in a picture format, such as .jpeg, .bmp or the like. For sake of simplicity, various specific formats for a picture may be collectively referred to as a picture format, and this is applicable for other types of contents such as video, audio, text, and so on. As another example, the user receives a video from a friend in an IM application and finds it interesting, therefore the user may store the video in a video format. Similarly, the user may want to store various types of information while the user is browsing contents through applications. The files stored in various formats are difficult to manage in an efficient way.

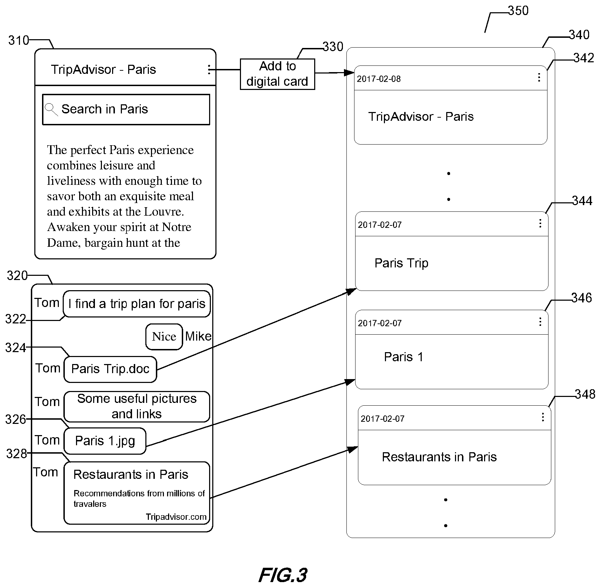

Figure 3 illustrates an exemplary scenario for collecting and managing information, which is useful for understanding the claimed invention.

When a user is browsing a website via a browser application 310, the user may find some information which the user is interested in. For example, the user is interested in the information about the travel in Paris as shown in the browser application 310, and wants to store the information. In an implementation, a functional button as shown by the three black dots is provided in the browser application, and the user is allowed to choose the function named "add to digital card" 330 via the functional button. Then the weblink of the website is sent as a message to an application 350 named "digital card", in which the weblink of the website is converted into a card 342. The creation of the card from the message or content may be implemented by using a programing language such as XML, JSON, and the like. The created card 342 is stored in a card pool 340, which may also be referred to as card collection or card set. It should be appreciated that the three block dots is illustrative and any presentation form for the same function is applicable. The name "add to digital card" or "digital card" is also illustrative, any other names is applicable for the similar function or application.

After receiving the message, the application 350 may analyze the content of the message so as to obtain summary information representing the message. As shown, the application 350 may obtain the summary information "TripAdvisor-Paris", which is presented on the card 342. Additionally, a representative picture may be obtained from the content of the website and may be presented on the card 342 as the summary information. Other information may also be obtained as the summary information. As shown, the card creation time may be presented on the card.

In an implementation, the application 350 may create the card 342 by converting the message to the card 342 locally. In an implementation, the application 350 may send the message to a digital card server, an example of which may be the server 130, and may receive the card 342 which is generated by the server. In either of the two implementations, it may be regarded as the application 350 creates the card either locally or remotely. It should be appreciated that the digital card application 350 may be implemented in different ways, for example, it may be a separate application which is associated with other applications such as the browser application 310, the IM application 320, a multimedia player application, a picture processing application, a document processing application, or the like, and it may be a plugin module incorporated in these applications.

A conversation session between the user named Mike and his friend named Tom is performed in an IM application 320. Examples of the IM application include various popular messaging applications such as MSN<TM>, ICQ<TM>, SKYPE<TM>, QQ<TM>, WeChat<TM> and so on. Different formats of messages occur during the conversation session. As shown, text messages such as text 322 are communicated in the conversation session, document messages such as document 324, picture messages such as picture 326 and weblink messages such as weblink 328 are also communicated in the conversation session. By means of similar operation as the above mentioned function 330, any of the various formats of messages 322-328 may be converted to cards. As shown, the user Tom may find messages 324, 326 and 328 useful and choose to collect them. By choosing the "add to digital card" function 330 for respective messages 324, 326, 328, the application 350 may obtain the respective messages 324, 326, 328, convert them into cards 344, 346, 348 respectively and store the cards 344, 346, 348 in the card collection. It should be appreciated that the "add to digital card" function is not shown along the lines from messages 324, 326, 328 to cards 344, 346, 348 for sake of clarity of the Figure.

The document message 324 may be in a document format, for example, Microsoft WORD format, PowerPoint format, Excel format and so on. The application 350 may convert the document message 324 to a card. Similarly the picture message 326 and the weblink message 328 are converted by the application 350 to cards. The cards converted from various formats of messages are in a universal card format, which may be referred to as a card format. Each card only contains a single format of message, and thus a single card is an atomic unit or a minimum unit for managing information or message collected from an information source. In this way, the information or messages are managed in units of atomic cards. As shown, the summary information may be obtained by analyzing the document message 324 and may be presented on the card 344. The summary information may be obtained by analyzing the picture message 326 and may be presented on the card 346. Although the summary information is shown as text, it may also be a part of the picture or a thumbnail of the picture. The summary information may be obtained by analyzing the website message 328 and may be presented on the card 348.

In addition, other formats of messages may also be converted to corresponding cards in the universal card format, for example, a video message, a voice message, and so on may be converted to corresponding cards in the universal card format. Therefore various messages in various formats, which may be found useful or interesting by a user during browsing of information via various applications, may be collected as atomic cards in a universal card format in a card collection, like putting physical cards recording information in a card box in the real world, thereby facilitating the efficient management of information.

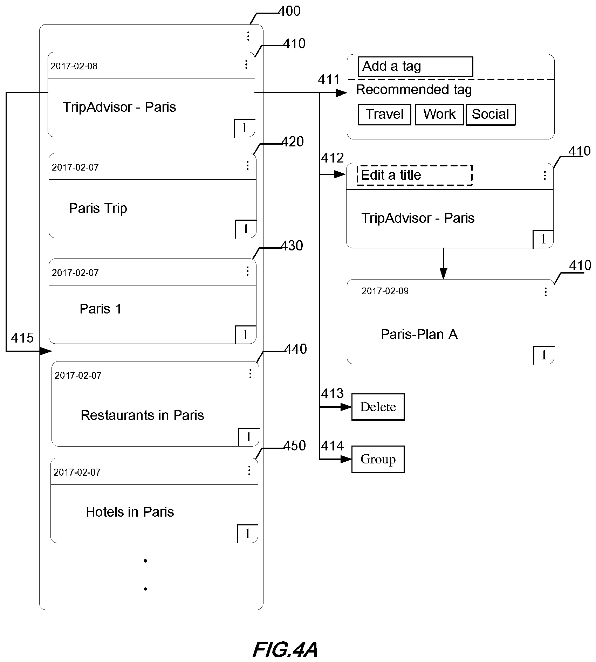

Figures 4A to 4C illustrate exemplary management of the cards, which is useful for understanding the claimed invention.

The card collection 400 as illustrated in Figure 4A corresponds to the card collection 340 as illustrated in Figure 3. The management of the card collection 400 or the cards therein is performed in units of cards.

When one of the cards, i.e., the card 410 in this example, is selected or operated, various managements may be performed as shown by arrows 411-415. As shown by arrow 411, a prompt may be presented to a user to add a tag for the card 410. Optionally, recommended tags may be presented for the user convenience to choose or edit the tag information of the card. In this example, a tag "travel" or more specifically "travel to Paris" may be added by the user for the card. The tag information is one of various types of property information of the card, and may be or may not be presented in the card depending on different designs of the card.

In addition to the tag information, various property information may be obtained for the card. For example, when the card 410 is obtained from a source such as the browser 310 as illustrated in Figure 3, various property information may be obtained automatically by the application 350. Examples of the property information may comprise at least one of the followings: time about the message or content corresponding to the card 410, location about the message corresponding to the card 410, time at which the card 410 is created, time at which the card 410 is updated, information about an application from which the message corresponding to the card 410 is received, relationship between the card 410 and any of other cards, tag or classification information of the card. The time about the message corresponding to the card 410 may be the time that the message is generated, updated and so on. The location about the message corresponding to the card 410 may be the location at which the message is generated, updated and so on, or may be the location that is described by the message. The information about an application from which the message corresponding to the card 410 is obtained may be the description of the source of the message. The relationship between the card 410 and other cards may be automatically generated or may be edited by a user. As an example, the relationship between the cards may be the order of the cards in a card collection. As another example, a part of cards in a card collection may be assigned a highest priority, another part of the cards in the card collection may be assigned a lower priority, and so on. In this way, the cards may be presented to a user in different priorities.

The tag information may be inputted by a user in an example, and may also be obtained by automatically analyzing the message corresponding to the card in another example. Taking the card 410 and the corresponding message as an example, when the message is obtained from the source, i.e., the browser 310, the message may be analyzed automatically in order to obtain the tag information or classification information. In an implementation, the digital card application 350 may perform an analysis on the message, i.e., the content of the obtained website, and obtain the related classification information related to the website. Examples of the classification information or tag information in this example may be travel, Paris, Louvre, and so on. In another implementation, the digital card application 350 may send the message, that is, the weblink or the website, to the digital card server such as the server 130 or 140. The server may convert the message to the card 410 and obtain the classification information or tag information by analyzing the message, and return the card 410 and its property information including the classification information or tag information to the application 350. In either way of implementation, it may be regarded as the application 350 at a client computing device performs the functions, and it may also be regarded as the application 350 at a server computing device performs the functions.

The automatic generation of the classification information or tag information may also be applicable to other types of messages such as image, video, voice, text and so on.

When an image message, for example, the Paris 1.jpg 326, is obtained, an image analysis may be performed on the image, similarly as the analysis to the website message as discussion above. An exemplary classification information or tag information obtained from the image analysis may be architecture, landscape, and so on. As another example, if a cat image is obtained, the classification information or tag information obtained from the image analysis may be cat and so on.

When a text message is obtained, a text analysis may be performed on the text. For example, the Paris Trip.doc message 324, or a text message such as the message 322 may be a text message which relates to the travel. An exemplary classification information or tag information obtained from the text analysis may be travel, Paris, and so on. The above analysis on the website message may include both the text analysis and the image analysis if the website message contains both text and image.

When a voice message is obtained, a voice analysis may be performed on the voice. In an aspect, the voice message may be classified through the voice analysis in terms of frequency, tone, localism and so on. For example, an exemplary classification information or tag information obtained from the voice analysis may be child, Cantonese, and so on. In another aspect, the content of the voice message may be classified through the voice analysis. For example, the voice may be converted into text, which may be processed further through text analysis.

It should be appreciated that various types of messages may be automatically analyzed to obtain the tag information or classification information as the property information of the cards. It should be appreciated that although it is described that the messages in various formats, such as the voice message, the text message, the image message and so on, are automatically analyzed when captured, it's also possible that the analysis may be performed at other timing, for example, the analysis may be performed after a message is converted to a card. For example, a voice card which is received by a user from another user may be analyzed in order to obtain the tag information or classification information.

Taking advantage to the property information of the cards, the cards may be classified in a card collection and further may be searched out of a card collection. This would be very convenient for the user when there are a large amount of cards in a card collection.

A search box may be provided for a user to input a search request with respect to a card collection. For example, if a search request or search keyword "Paris" is inputted, cards having property information matching the search request may be chosen out of the card collection and presented to the user. Any of the above mentioned property information as well as other suitable property information may be utilized as a search keyword.

As shown by arrow 412, a prompt for editing a title for a card may be provided to a user. In this example, a title "TripAdvisor-Paris" has been obtained for the card 410 by automatic analysis of the website message, a new title "Paris-Plan A" may be set for the card 410 through the title editing function. In another example, for example, for a voice message, a title may be not automatically obtained, and thus may be added through the title editing function.

As shown by arrow 413, a card, e.g., the card 410, may be deleted from the card collection 400. In an implementation, a deletion button may be provided on the card 410 for a user to delete the card by operating the deletion button. In another implementation, a specific gesture may be used to delete the card, for example, the card may be hold by a pointer such as a finger, a mouse cursor or the like for a predetermined time period so as to enter a manageable state, then a specific gesture such as a swipe to a specific direction would cause the card 410 to be deleted from the card collection 400.

As shown by arrow 415, the order or position of a card, e.g., the card 410, may be changed among the cards in the card collection 400. In an implementation, a reorder button may be provided on the card 410 for a user to reorder the card. In another implementation, a specific gesture may be used to reorder the card, for example, the card may be hold by a pointer such as a finger, a mouse cursor or the like for a predetermined time period so as to enter a manageable state, then the card 410 may be dragged to a position as shown by the arrow 415 to cause the card 410 to be reordered in the card collection 400.

As shown by arrow 414, a card, e.g., the card 410, may be grouped with other cards or card collections. In an implementation, a group button may be provided on the card 410 for a user to group the card with other cards or card collections.

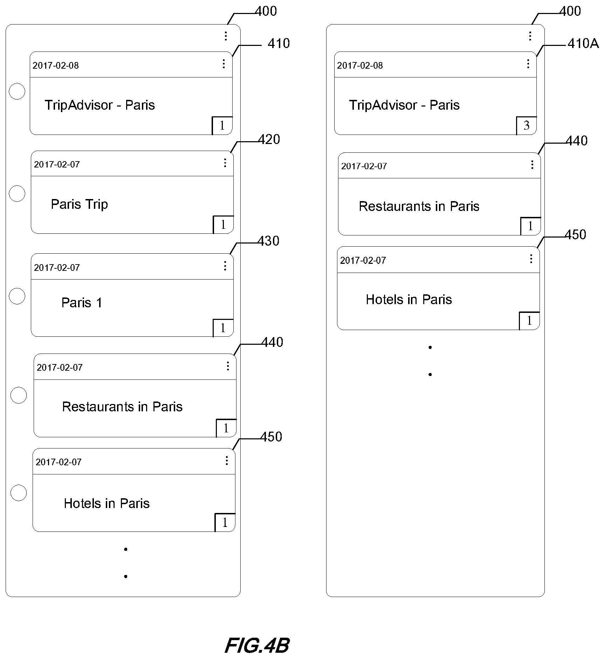

An exemplary implementation of grouping is illustrated in Figure 4B. The card collection 400 is in a manageable or editable state as shown in the left of Figure 4B when the group button of any of the cards is selected or when the group button of the card collection 400 is selected. In the shown example, multiple cards 410 to 430 are selected by means of the selection boxes as shown by the circles on the left of the cards, and are grouped into a card collection 410A. The number of "1" shown in the right bottom corner of each of the cards 410-450 in the left of the Figure 4B indicates one card being there. The number of "3" shown in the right bottom corner of the card collection 410A in the right of the Figure 4B indicates three cards being there.

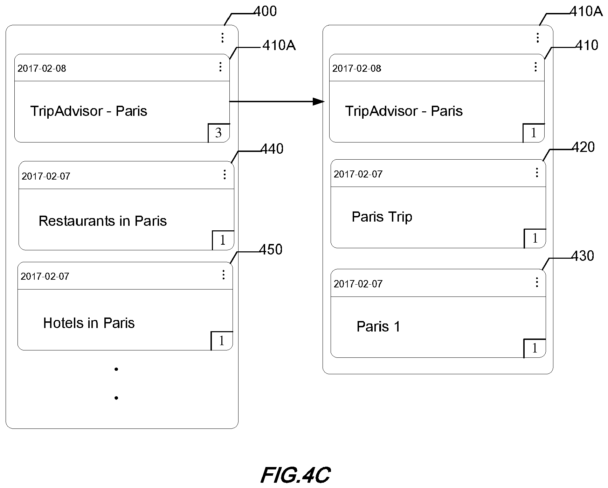

As shown in Figure 4C, the card collection 410A includes cards 410 to 430, which is a subset of the card collection 400, and may be operated in a similar way as to the card collection 400. And part of the cards in the card collection 410A may be grouped into another card collection which is a subset of the card collection 410. Each one of the card 410, the card collection 410A, and the card collection 400 may be sent or shared to another user or on line as a single file, for example, each one of the card 410, the card collection 410A, and the card collection 400 may be sent or shared as a single file or message in a conversation session of the IM application 320. In this way, either a card or a card collection may be managed and shared in a unified format, this would be very convenient for users, and moreover a card collection which is composed of cards organized in a meaningful sequence may be shared in a unified format, this would be very productive and efficient for users.

The managements of cards as shown by arrows 413, 414, 415 are performed in terms of cards or card collections, and may be performed in a card collection manageable or editable state, an example of such state is shown in the left of the Figure 4B. In this state, any one of the cards in a card collection 400 or a card collection 410A may be managed such as being deleted, grouped, reordered, and so on. Referring to the right of the Figure 4B, any one of the cards 440-450 and card collection 410A may be managed such as being deleted, grouped, reordered, and so on.

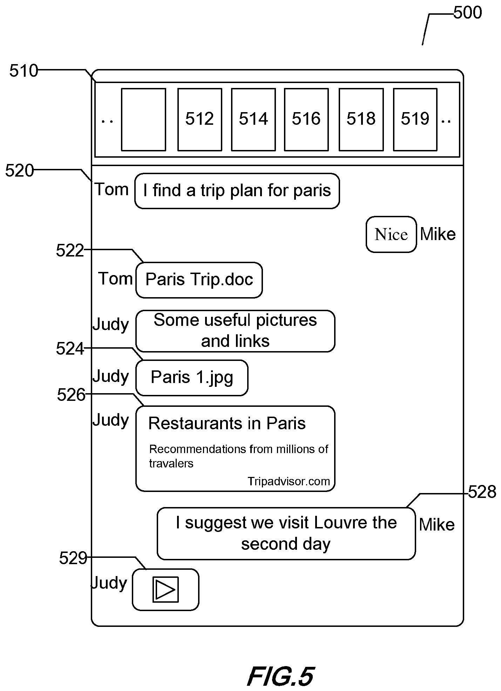

Figure 5 illustrates an exemplary scenario for collaboratively collecting and managing information according to an embodiment.

An exemplary user interface (UI) of an application 500 such as the digital card application is shown in the Figure 5. The application 500 may also be referred to as application instance 500, which indicates an application in execution state. The two terms application and application instance may be utilized interchangeable.

As shown, two information flows are presented in the application 500, one is a conversation session 520 among multiple users and the other is a card collection 510 associated with the conversation session 520. The conversation session 520 involves three users named Tom, Judy and Mike, and may include more or less users in different cases. The user Mike may be the user operating on the computing device at which the application 500 is executing. The other users Tom and Judy may be operating on remote computing devices at which similar digital card applications are executing.

In this exemplary scenario, the users are discussing and making a travel plan to Paris. It should be appreciated that any productive tasks may be performed in such a way, for example, a group of users may be preparing a work plan, may be solving a technique problem, may be discussing a movie script, and so on. In the collaborative working, some of the messages from some of the users may be valuable and deserved to be collected.

In an implementation, any of the users in the conversation session may collect a message communicated in the conversation session to the card collection 510. For example, the message "Paris Trip.doc" 522 sent by a user such as Tom may be collected by any of the users such as Mike. The user Mike may collect the message by choosing the "add to card" button as discussed above or by dragging the message to the card collection 510. After obtaining the message which is collected, the digital card application 500 converts the message 522 to a card 512, and adds the card 512 to the card collection 510 associated with the conversation collection. Similarly, during the conversation session 520, messages in various formats, such as the image message 524, website message 526, text message 528, a voice message 529 or the like, may be selected by any of the users so as to be converted to cards 514, 516, 518, 519 respectively and added to the card collection 510. The card collection 510 is managed or edited in units of cards similarly as performed to the card collection 400 or the card collection 410A as discussed above. In this way, the digital card application 500 provides a productivity tool for collaborative work to achieve a task.

When a message is added to a card in the card collection 510 by one of the users, the card is synchronized to other users. For example, when the user Mike operating on the application 500 at the client computing device selects a message 522 to convert to a card 512 and add to the card collection 510, the card 512 is automatically synchronized in the card collections of digital applications executing at the computing devices of the other users Tom and Judy. In addition to the adding of card, other edition of the cards or card collection 510 as discussed with respect to the card collection 400 and 410A may be synchronized among the users.

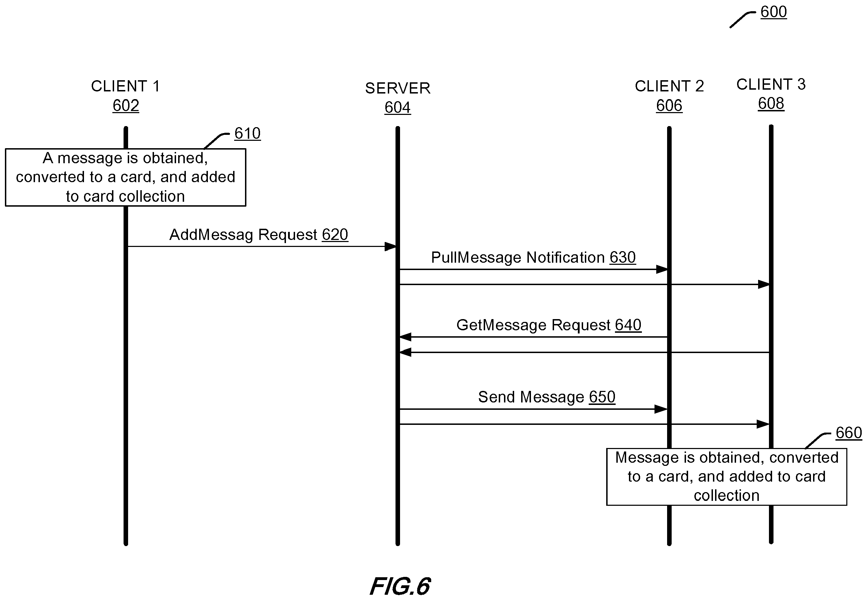

Figure 6 illustrates an exemplary synchronization process of the card collection 510 according to an embodiment. Client 1 602 refers to the digital card application 500 executing the computing device of a user such as Mike, or refers to the user Tom or the client computing device. Client 2 606 or client 3 608 refers to the digital card application executing the computing device of another user such as Tom or Judy, or refers to the user or the client computing device. A server 604 refers to the digital card server or another server suitable to perform the synchronization.

At step 610, a message such as message 522 is obtained by client 1 602, and converted to a card which is added into the card collection 510. The client 1 sends an AddMessage Request to the server 604 at step 620. The request AddMessage Request may include the identification (ID) of the conversation session 520 among the users, therefore the server 604 may identify the other users of the conversation session 520 and send a PullMessage Notification to the other users which are illustrated by clients 2 and 3 at step 630. After receiving the PullMessage Notification, the clients 2 and 3 send GetMessage Requests to the server at step 640. The server then sends the message to the clients 2 and 3 at step 650. Then the message is obtained, converted to a card and added to the card collection associated with the conversation session 520 at the client 2 and 3 respectively at step 660. Then the synchronization of the card is completed among the users.

As an alternative implementation, the steps 630 and 640 may be omitted. After receiving the AddMessage Request 620, the server may send the message together with the conversation session ID to the other users in order for the other users to synchronize the card collections associated with the conversation.

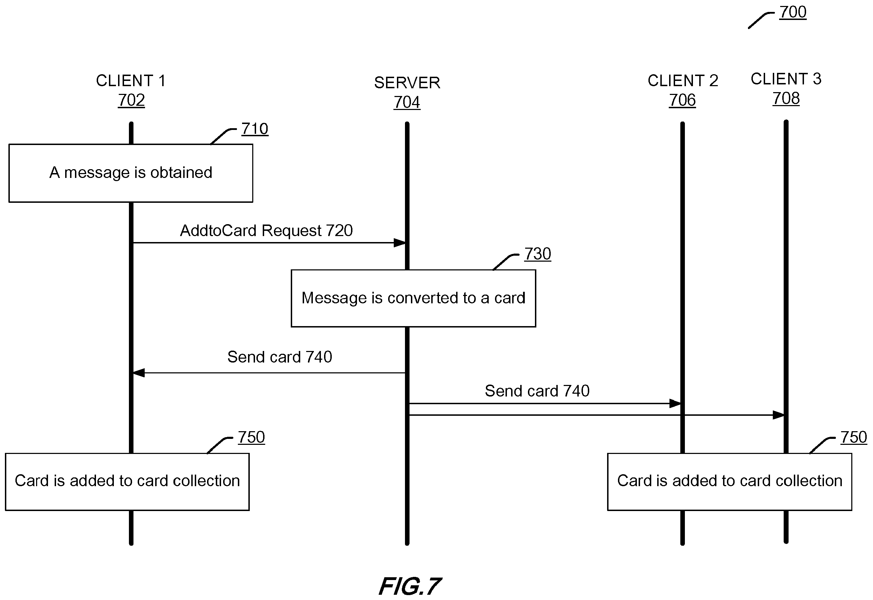

Figure 7 illustrates an exemplary synchronization process of the card collection 510. Client 1 702, 2 706, 3 708 and server 704 correspond to the Client 1 602, 2 606, 3 608 and server 604.

At step 710, a message such as message 522 is obtained by client 1 702. An AddtoCard Request 720 is sent from the client 1 to the server together with the message 522 and the ID of the conversation session 520. The server 704 converts the message to a card at step 730. The server 704 identifies the users of the conversation session 520 based on the conversation session ID, and sends the card to the clients 1 to 3 at step 740. After receiving the card, the clients 1 to 3 add the card into the card collection associated with the conversation session 520 at the clients 1 to 3 respectively at step 750. Then the synchronization of the card is completed among the users.

It should be appreciated that there may be variations for the synchronization process as illustrated in Figures 6 and 7.

Although it is illustrated in Figure 5 that the two data flows 510 and 520, i.e., the card collection and the conversation session, are implemented in an application such as the digital card application 500, it is also applicable that the two data flows 510 and 520 are implemented with two applications or software modules.

In an implementation, the conversation session 520 among the multiple users may be implemented in an instant messaging application while the card collection 510 associated with the conversation session may be implemented in the digital card application. The scenario as illustrated in Figure 5 may be implemented by associating the instant messaging application and the digital card application. The instant messaging application may support presenting the card collection 510, or may not support presenting the card collection 510, but in either case, the card collection 510 is maintained at the digital card application and synchronized among the users during the collection of messages by the users in conversation session 520.

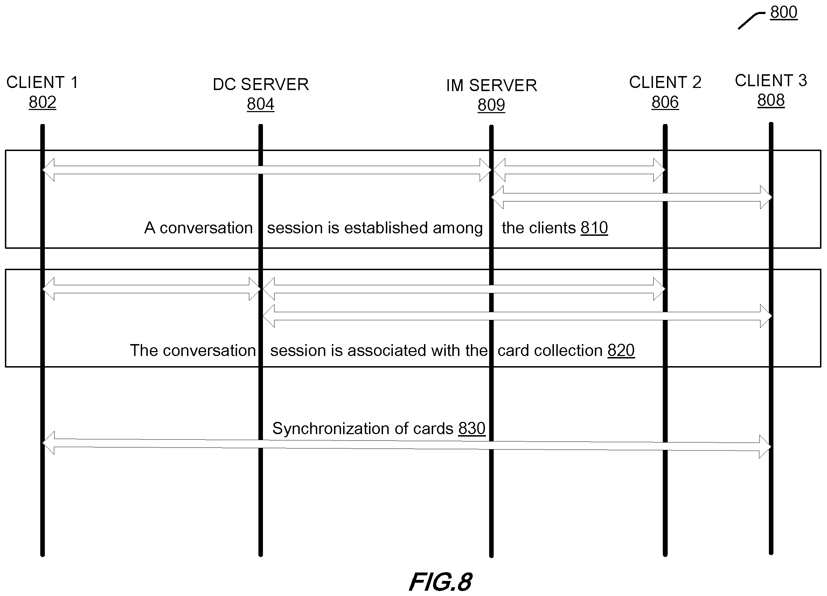

Figure 8 illustrates an exemplary association between an instant messaging service and a digital card service according to an embodiment. Client 1 802, 2 806, 3 808 and digital card (DC) server 804 correspond to the Client 1 602, 2 606, 3 608 and server 604 as illustrated in Figure 6, the instant messaging (IM) server 809 provides the conversation session among users.

At the process of 810, the clients 1 to 3 establishes a conversation session such as the session 520 provided by the IM server 809, and a conversation session ID is assigned to the conversation session 520 and sent to the clients. At the process of 820, the conversation session ID is sent from the clients to the DC server 804, and an association between the conversation session 520 and the card collection 810 is established via the conversation session ID. As an alternative way of process 820, the conversation ID may be sent from the IM server to the DC server to establish the association of the two services. It should be appreciated that various manners for establishing the association of the two services may be applicable in the disclosure.

After the association between the two services is established, the synchronization of cards as illustrated in Figures 6 and 7 is performed at the process 830. In an implementation, the synchronization process illustrated in Figure 6 may be performed by either the DC server 804 or the IM server 809. In another implementation, the synchronization process illustrated in Figure 7 may be performed by the DC server 804.

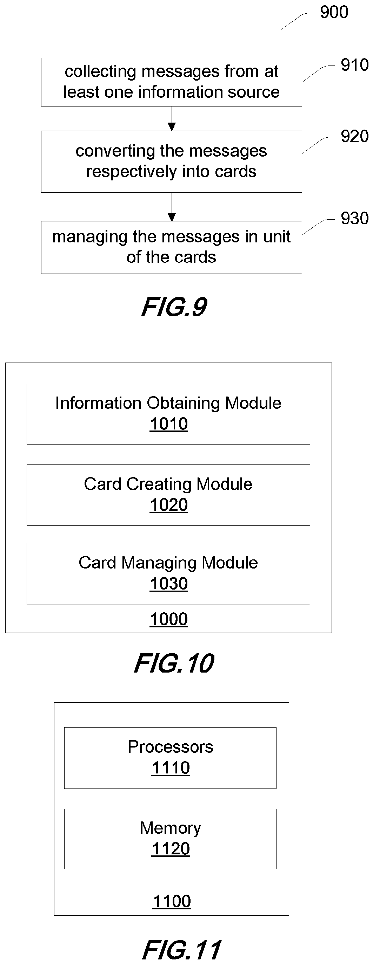

Figure 9 illustrates a method for managing information, that is useful for understanding the claimed invention. At step 910, messages are collected from at least one information source. Examples of the information source may be applications such as an application for browsing website, an application for presenting image, an application for displaying multimedia such as video or voice, an application for processing text, and any other suitable application.

At step 920, the messages are respectively converted into cards. The messages may be in various formats, examples of the formats of the messages include text, image, video, voice, weblink, and so on. The cards are in a universal format, and each card is an atomic card which only contains a single format of message.

At step 930, the messages or the cards are managed in unit of the cards, which may also be referred to as atomic cards. Examples of the management of messages or cards may be storing the cards in a card collection or a card pool, editing the cards, editing the card collection in units of cards, and any other suitable management on the card and card collection.

In an implementation, in the step 910, a first message is obtained or collected from a first application in response to an operation of the first message by a first user in the first application. In the step 920, the first message in a format is converted into a first card. In the step 930, the first card is stored in a card collection. Each of the messages is of a format, such as a text format, an image format, a video format, a voice format, a weblink format, or the like, while the cards are in a universal format. Therefore each card in the universal format contains only one media content such as text, image, video, voice, weblink, or the like.

In an implementation, in the step 910, a second message is obtained or collected from a second application in response to an operation of the second message by the first user in the second application. In the step 920, the second message is converted into a second card. In the step 930, the second card in the universal format is stored in the card collection.

According to the invention, the first message is obtained from a conversation session of the first application in response to a selection of the first message by the first user from messages communicated in the conversation session, wherein the conversation session involves multiple users including the first user. In the step 930, a card collection associated with the conversation session for the first user is updated by adding the first card into the card collection. The card collection and/or a card in the card collection may be edited. The card collection may also be shared or communicated in the conversation session.

In an implementation, the conversation session among the multiple users may be presented in a user interface (UI) of the first application. The card collection may also be presented in the UI of the first application.

According to the invention, the first card is synchronized to a card collection associated with the conversation session for a second user of the multiple users.

According to the invention, a third card is synchronized to the card collection associated with the conversation session for the first user in response to the third card being added into the card collection associated with the conversation session for the second user.

In an implementation, property information of a card may be obtained when the corresponding message is obtained. The property information may comprises at least one of time about a message corresponding to the card, location about the message corresponding to the card, time at which the card is created, time at which the card is updated, information about an application from which the message corresponding to the card is received, relationship between the card and other cards, tag or classification information of the card. The property information is recorded in association with the card. Similarly, property information of a card collection may be obtained based on the cards therein and may also be obtained through user input, for example, a tag may be inputted by a user for a card collection.

In an implementation, the tag information of a card may be obtained by automatically analyzing the message corresponding to the card. In another implementation, the tag information of the card may be inputted by a user. For example, the tag information of the card may be obtained from a result of image analysis to the message corresponding to the card, may be obtained from a result of voice analysis to the message corresponding to the card, may be obtained from a result of text analysis to the message corresponding to the card, or the like.

In an implementation, a search request may be received from a user, and cards having property information matching the search request may be presented.

In an implementation, in response to a user input, multiple cards may be grouped into a card collection, an order of cards may be adjusted in a card collection, a card may be added into a card collection; a card may be deleted from a card collection, or the like. And a card or a card collection may also be shared via IM application or on website, or in any other suitable way.

Figure 10 illustrates an exemplary apparatus 1000 for managing information, useful for understanding the claimed invention.

The apparatus 1000 comprises an information obtaining module 1010, a card creating module 1020 and a card managing module 1030. The information obtaining module 1010 is configured to collect messages from at least one information source. The card creating module 1020 is configured to convert the messages respectively into cards. The card managing module 1030 is configured to manage the messages in unit of the cards.

In an implementation, the information obtaining module 1010 is further configured to obtain a first message from a first application in response to an operation of the first message by a first user in the first application. The card creating module 1020 is further configured to convert the first message into a first card. The card managing module 1030 is further configured to store the first card in a card collection.

According to the invention, the information obtaining module 1010 is further configured to obtain the first message from a conversation session of the first application in response to a selection of the first message by the first user from messages communicated in the conversation session, wherein the conversation session involves multiple users including the first user. The card managing module 1030 is further configured to update a card collection associated with the conversation session for the first user by adding the first card into the card collection.

In an implementation, the apparatus further comprises a presenting module which is not shown in the Figure 10. The presenting module is configured to present the conversation session among the multiple users in a UI of the first application. The presenting module is configured to present the card collection in the UI of the first application.

According to the invention, the card managing module 1030 is further configured to synchronize the first card to a card collection associated with the conversation session for a second user of the multiple users.

According to the invention, the card managing module is further configured to synchronize a third card to the card collection associated with the conversation session for the first user in response to the third card being added into the card collection associated with the conversation session for the second user.

It should be appreciated that although it is described that the card managing module performs the synchronization function, the synchronization function may be performed with an alternative module such as a synchronization module. The number of modules implemented in the apparatus 1000 and the names of the modules in the apparatus 1000 would not limit the disclosure.

In an implementation, the card managing module 1030 is further configured to obtaining tag information of a card from at least one of a result of image analysis to a message corresponding to the card, a result of voice analysis to the message corresponding to the card, and a result of text analysis to the message corresponding to the card; and recording the tag information in association with the card. It should be appreciated that the card managing module may be configured to obtain the property information as described above.

In an implementation, the card managing module 1030 is further configured to perform one of the following operations: grouping multiple cards into a card collection; adjusting an order of cards in a card collection; adding a card into a card collection; deleting a card from a card collection; and sharing a card or a card collection.

It should be appreciated that the apparatus 1000 may also comprise any other modules configured for performing any operations of the methods for managing information according to the various embodiments as mentioned above.

Figure 11 illustrates an exemplary system 1100 for managing information, useful for understanding the claimed invention.

The system 1100 may comprise one or more processors 1110. The system 1100 may further comprise a memory 1120 that is connected with the one or more processors 1110. The one or more processors 1110 may correspond to the processing unit 240 as shown in Figure 2, and the memory 1120 may correspond to at least one of the system memory 210, removable storage 250 and non-removable storage 260 as shown in Figure 2. The memory 1120 may store computer-executable instructions that, when executed, cause the one or more processors 1110 to collect messages from at least one information source, convert the messages respectively into cards, and manage the messages in unit of the cards.

The computer-executable instructions, when executed, cause the one or more processors 1110 to perform any operations of the methods for managing information according to the embodiments as mentioned above.

The embodiments of the present disclosure may be embodied in a non-transitory computer-readable medium. The non-transitory computer-readable medium may comprise instructions that, when executed, cause one or more processors to perform any operations of the methods for managing information according to the embodiments as mentioned above.

It should be appreciated that all the operations in the methods described above are merely exemplary, and the present disclosure is not limited to any operations in the methods or sequence orders of these operations.

It should also be appreciated that all the modules in the apparatuses described above may be implemented in various approaches. These modules may be implemented as hardware, software, or a combination thereof. Moreover, any of these modules may be further functionally divided into sub-modules or combined together.

Processors have been described in connection with various apparatuses and methods. These processors may be implemented using electronic hardware, computer software, or any combination thereof. Whether such processors are implemented as hardware or software will depend upon the particular application and overall design constraints imposed on the system. By way of example, a processor, any portion of a processor, or any combination of processors presented in the present disclosure may be implemented with a microprocessor, microcontroller, digital signal processor (DSP), a field-programmable gate array (FPGA), a programmable logic device (PLD), a state machine, gated logic, discrete hardware circuits, and other suitable processing components configured to perform the various functions described throughout the present disclosure. The functionality of a processor, any portion of a processor, or any combination of processors presented in the present disclosure may be implemented with software being executed by a microprocessor, microcontroller, DSP, or other suitable platform.

Software shall be construed broadly to mean instructions, instruction sets, code, code segments, program code, programs, subprograms, software modules, applications, software applications, software packages, routines, subroutines, objects, threads of execution, procedures, functions, etc. The software may reside on a computer-readable medium. A computer-readable medium may include, by way of example, memory such as a magnetic storage device (e.g., hard disk, floppy disk, magnetic strip), an optical disk, a smart card, a flash memory device, random access memory (RAM), read only memory (ROM), programmable ROM (PROM), erasable PROM (EPROM), electrically erasable PROM (EEPROM), a register, or a removable disk. Although memory is shown separate from the processors in the various aspects presented throughout the present disclosure, the memory may be internal to the processors (e.g., cache or register).

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein.

## Claims

1. A method for managing information carried out in a computing device (200), comprising:
collecting (910) messages from at least one information source;
converting (920) the messages respectively into cards which represent a minimum unit for managing messages collected from an information source; and
managing (930) the messages in unit of the cards;
wherein the cards are converted from various formats of messages and are in a universal card format;
wherein a single card contains a single format of a message;
wherein:
the collecting (910) comprises obtaining a first message (324) from a first application (320) in response to an operation of the first message (324) by a first user in the first application (320);
the converting (920) comprises converting the first message (324) into a first card (344); and
the managing (930) comprises storing the first card (344) in a card collection (340);
**characterized in that**
the obtaining the first message (324) comprises obtaining the first message (324) from a conversation session of the first application (320) in response to a selection of the first message by the first user from messages communicated in the conversation session, wherein the conversation session involves multiple users including the first user;
the managing (930) comprises updating a card collection (340) associated with the conversation session for the first user by adding the first card (344) into the card collection (340); and
wherein the method further comprises:
synchronizing (660; 750; 830) the first card to a card collection associated with the conversation session for a second user of the multiple users; and/or
synchronizing (660; 750; 830) a third card to the card collection associated with the conversation session for the first user in response to the third card being added into a card collection associated with the conversation session for the second user.

2. An apparatus for managing information, comprising:
an information obtaining module (1010) configured to collect messages from at least one information source;
a card creating module (1020) configured to convert the messages respectively into cards which represent a minimum unit for managing messages collected from an information source; and
a card managing module (1030) configured to manage the messages in unit of the cards
wherein the cards are converted from various formats of messages and are in a universal card format; and
wherein a single card contains a single format of a message;
wherein:
the information obtaining module (1010) is configured to obtain a first message (324) from a first application (320) in response to an operation of the first message (324) by a first user in the first application (320);
the card creating module (1020) is configured to convert the first message (324) into a first card (344); and
the card managing module (1030) is configured to store the first card (344) in a card collection (340);
**characterized in that**
the information obtaining module (1010) is configured obtain the first message (324) from a conversation session of the first application (320) in response to a selection of the first message by the first user from messages communicated in the conversation session, wherein the conversation session involves multiple users including the first user;
the card managing module (1030) is configured to update a card collection (340) associated with the conversation session for the first user by adding the first card (344) into the card collection (340); and
wherein the apparatus is further configured to:
synchronize (660; 750; 830) the first card to a card collection associated with the conversation session for a second user of the multiple users; and/or
synchronize (660; 750; 830) a third card to the card collection associated with the conversation session for the first user in response to the third card being added into a card collection associated with the conversation session for the second user.

3. A computer program product comprising code means configured, when executed on a computing device (110-140), to implement the steps of claim 1.

## Patentansprüche

1. Verfahren zum Verwalten von Informationen, das in einer Computervorrichtung (200) ausgeführt wird, umfassend:
Sammeln (910) von Nachrichten von mindestens einer Informationsquelle;
Konvertieren (920) der Nachrichten jeweils in Karten, die eine Mindesteinheit für die Verwaltung von Nachrichten darstellen, die von einer Informationsquelle gesammelt wurden; und
Verwaltung (930) der Nachrichten in der Einheit der Karten;
wobei die Karten aus verschiedenen Nachrichtenformaten konvertiert werden und in einem universellen Kartenformat vorliegen;
wobei eine einzige Karte ein einziges Format einer Nachricht enthält;
wobei:
das Sammeln (910) das Erhalten einer ersten Nachricht (324) von einer ersten Anwendung (320) als Reaktion auf eine Bedienung der ersten Nachricht (324) durch einen ersten Benutzer in der ersten Anwendung (320) umfasst;
das Konvertieren (920) das Konvertieren der ersten Nachricht (324) in eine erste Karte (344) umfasst; und
die Verwaltung (930) das Speichern der ersten Karte (344) in einer Kartensammlung (340) umfasst;
**dadurch gekennzeichnet, dass**
das Erhalten der ersten Nachricht (324) das Erhalten der ersten Nachricht (324) aus einer Gesprächssitzung der ersten Anwendung (320) als Reaktion auf eine Auswahl der ersten Nachricht durch den ersten Benutzer aus Nachrichten, die in der Gesprächssitzung kommuniziert werden, umfasst, wobei die Gesprächssitzung mehrere Benutzer einschließlich des ersten Benutzers umfasst;
das Verwalten (930) das Aktualisieren einer Kartensammlung (340), die der Gesprächssitzung für den ersten Benutzer zugehörig ist, durch Hinzufügen der ersten Karte (344) zu der Kartensammlung (340) umfasst; und
wobei das Verfahren weiter umfasst:
Synchronisieren (660; 750; 830) der ersten Karte mit einer Kartensammlung, die der Gesprächssitzung für einen zweiten Benutzer der mehreren Benutzer zugehörig ist; und/oder
Synchronisieren (660; 750; 830) einer dritten Karte mit der Kartensammlung, die der Gesprächssitzung für den ersten Benutzer zugehörig ist, als Reaktion darauf, dass die dritte Karte zu einer Kartensammlung hinzugefügt wird, die der Gesprächssitzung für den zweiten Benutzer zugehörig ist.

2. Einrichtung zur Verwaltung von Informationen, umfassend:
ein Informationenerhaltungsmodul (1010), das so konfiguriert ist, dass es Nachrichten von mindestens einer Informationsquelle sammelt;
ein Kartenerstellungsmodul (1020), das so konfiguriert ist, dass es die Nachrichten jeweils in Karten konvertiert, die eine Mindesteinheit zum Verwalten von Nachrichten darstellen, die von einer Informationsquelle gesammelt wurden; und
ein Kartenverwaltungsmodul (1030), das so konfiguriert ist, dass es die Nachrichten in der Einheit der Karten verwaltet
wobei die Karten aus verschiedenen Nachrichtenformaten konvertiert werden und in einem universellen Kartenformat vorliegen; und
wobei eine einzige Karte ein einziges Format einer Nachricht enthält;
wobei:
das Informationenerhaltungsmodul (1010) so konfiguriert ist, dass es eine erste Nachricht (324) von einer ersten Anwendung (320) als Reaktion auf eine Bedienung der ersten Nachricht (324) durch einen ersten Benutzer in der ersten Anwendung (320) erhält;
das Kartenerstellungsmodul (1020) so konfiguriert ist, dass es die erste Nachricht (324) in eine erste Karte (344) konvertiert; und
das Kartenverwaltungsmodul (1030) so konfiguriert ist, dass es erste Karte (344) in einer Kartensammlung (340) speichert;
**dadurch gekennzeichnet, dass**
das Informationenerhaltungsmodul (1010) so konfiguriert ist, dass es die erste Nachricht (324) aus einer Gesprächssitzung der ersten Anwendung (320) als Reaktion auf eine Auswahl der ersten Nachricht durch den ersten Benutzer aus Nachrichten, die in der Gesprächssitzung kommuniziert werden, erhält, wobei die Gesprächssitzung mehrere Benutzer einschließlich des ersten Benutzers umfasst;
das Kartenverwaltungsmodul (1030) so konfiguriert ist, dass es eine der Gesprächssitzung für den ersten Benutzer zugehörige Kartensammlung (340) durch Hinzufügen der ersten Karte (344) zu der Kartensammlung (340) aktualisiert; und
wobei die Einrichtung weiter konfiguriert ist zum:
Synchronisieren (660; 750; 830) der ersten Karte mit einer Kartensammlung, die der Gesprächssitzung für einen zweiten Benutzer der mehreren Benutzer zugehörig ist; und/oder
Synchronisieren (660; 750; 830) einer dritten Karte mit der Kartensammlung, die der Gesprächssitzung für den ersten Benutzer zugehörig ist, als Reaktion darauf, dass die dritte Karte zu einer Kartensammlung hinzugefügt wird, die der Gesprächssitzung für den zweiten Benutzer zugehörig ist.

3. Computerprogrammprodukt, umfassend Codemittel, die so konfiguriert sind, dass sie, wenn sie auf einer Computervorrichtung (110-140) ausgeführt werden, die Schritte von Anspruch 1 implementieren.

## Revendications

1. Procédé de gestion d'informations réalisé dans un dispositif informatique (200), comprenant :
la collecte (910) de messages provenant d'au moins une source d'informations ;
la conversion (920) des messages respectivement en cartes qui représentent une unité minimum pour la gestion de messages collectés provenant d'une source d'informations ; et
la gestion (930) des messages dans une unité des cartes ;
dans lequel les cartes sont converties à partir de divers formats de messages et sont dans un format de carte universel ;
dans lequel une seule carte contient un seul format d'un message ;
dans lequel :
la collecte (910) comprend l'obtention d'un premier message (324) d'une première application (320) en réponse à une opération du premier message (324) par un premier utilisateur dans la première application (320) ;
la conversion (920) comprend la conversion du premier message (324) en une première carte (344) ; et
la gestion (930) comprend le stockage de la première carte (344) dans une collection de carte (340) ;
**caractérisé en ce que**
l'obtention du premier message (324) comprend l'obtention du premier message (324) d'une session de conversation de la première application (320) en réponse à une sélection du premier message par le premier utilisateur parmi des messages communiqués dans la session de conversation, dans lequel la session de conversation implique de multiples utilisateurs incluant le premier utilisateur ;
la gestion (930) comprend la mise à jour d'une collection de carte (340) associée à la session de conversation pour le premier utilisateur par ajout de la première carte (344) dans la collection de carte (340) ; et
dans lequel le procédé comprend en outre :
la synchronisation (660; 750; 830) de la première carte avec une collection de carte associée à la session de conversation pour un second utilisateur de multiples utilisateurs ; et/ou
la synchronisation (660; 750 ; 830) d'une troisième carte avec la collection de carte associée à la session de conversation pour le premier utilisateur en réponse à la troisième carte qui est ajoutée dans une collection de carte associée à la session de conversation pour le second utilisateur.

2. Appareil de gestion d'informations, comprenant :
un module d'obtention d'informations (1010) configuré pour collecter des messages provenant d'au moins une source d'informations ;
un module de création de carte (1020) configuré pour convertir les messages respectivement en cartes qui représentent une unité minimum pour la gestion de messages collectés provenant d'une source d'informations ; et
un module de gestion de carte (1030) configuré pour gérer les messages dans l'unité des cartes
dans lequel les cartes sont converties à partir de divers formats de messages et sont dans un format de carte universel ; et
dans lequel une seule carte contient un seul format d'un message ;
dans lequel :
le module d'obtention d'informations (1010) est configuré pour obtenir un premier message (324) d'une première application (320) en réponse à une opération du premier message (324) par un premier utilisateur dans la première application (320) ;
le module de création de carte (1020) est configuré pour convertir le premier message (324) en une première carte (344) ; et
le module de gestion de carte (1030) est configuré pour stocker la première carte (344) dans une collection de carte (340) ;
**caractérisé en ce que**
le module d'obtention d'informations (1010) est configuré pour obtenir le premier message (324) d'une session de conversation de la première application (320) en réponse à une sélection du premier message par le premier utilisateur parmi des messages communiqués dans la session de conversation, dans lequel la session de conversation implique de multiples utilisateurs incluant le premier utilisateur ;
le module de gestion de carte (1030) est configuré pour mettre à jour une collection de carte (340) associée à la session de conversation pour le premier utilisateur par ajout de la première carte (344) dans la collection de carte (340) ; et
dans lequel l'appareil est en outre configuré pour :
synchroniser (660; 750 ; 830) la première carte avec une collection de carte associée à la session de conversation pour un second utilisateur de multiples utilisateurs ; et/ou
synchroniser (660; 750 ; 830) une troisième carte avec la collection de carte associée à la session de conversation pour le premier utilisateur en réponse à la troisième carte qui est ajoutée dans une collection de carte associée à la session de conversation pour le second utilisateur.

3. Produit de programme informatique comprenant des moyens de code configurés, lorsqu'ils sont exécutés sur un dispositif informatique (110-140), pour implémenter les étapes selon la revendication 1.
